(19) Europäisches Patentamt
European Patent Office
Office européen des brevets

(11) EP 3 950 314 A1

(12) **EUROPEAN PATENT APPLICATION**
published in accordance with Art. 153(4) EPC

(43) Date of publication:
**09.02.2022 Bulletin 2022/06**

(21) Application number: **20783898.8**

(22) Date of filing: **01.04.2020**

(51) International Patent Classification (IPC):
**B32B 7/025** (2019.01)  **B32B 27/00** (2006.01)
**B32B 27/18** (2006.01)

(52) Cooperative Patent Classification (CPC):
**B32B 7/025; B32B 27/00; B32B 27/18**

(86) International application number:
**PCT/JP2020/015096**

(87) International publication number:
**WO 2020/204103 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2019 JP 2019070584**

(71) Applicant: **Toppan Printing Co., Ltd.
Tokyo 110-0016 (JP)**

(72) Inventors:
• **SHODA Ryo
Tokyo 110-0016 (JP)**
• **YAMAZAKI Tomohiko
Tokyo 110-0016 (JP)**

(74) Representative: **Hoffmann Eitle
Patent- und Rechtsanwälte PartmbB
Arabellastraße 30
81925 München (DE)**

(54) **TRANSPARENT CONDUCTIVE GAS BARRIER MULTILAYER BODY, METHOD FOR PRODUCING SAME, AND DEVICE**

(57) A transparent conductive gas barrier laminate according to the present disclosure includes a first transparent gas barrier film; a transparent adhesive layer made of one adhesive selected from the group consisting of an acrylic adhesive, a silicone adhesive, a polyolefin adhesive, a urethane adhesive, and a polyvinyl ether adhesive; a transparent conductive layer made of a conductive organic material or a conductive inorganic material; and a second transparent gas barrier film. The first transparent gas barrier film, the transparent adhesive layer, the transparent conductive layer, and the second transparent gas barrier film are laminated in this order. A method for producing the transparent conductive gas barrier laminate includes bonding together the first transparent gas barrier film and the transparent conductive layer via the transparent adhesive layer.

FIG.1

**Description**

[Technical Field]

The present disclosure relates to transparent conductive gas barrier laminates and methods for producing the same, and devices.

[Background Art]

Electronic devices having a structure protected by a laminate film are under development. Such a laminate film includes a moisture-proof layer or a gas barrier layer. For example, PTL 1 discloses a conductive layer support including a resin sheet, a moisture-proof layer, an adhesive layer, and a resin sheet in this order, and an electronic paper including the conductive-layer support. PTL 2 discloses a transparent conductive film including a substrate layer, a gas barrier layer made of a predetermined material, and a transparent conductive layer, and an electronic device including the transparent conductive film.

[Citation List]

[Patent Literature]

[PTL 1] JP 2003-175566 A
[PTL 2] JP 2012-86378 A

[Summary of the Invention]

[Technical Problem]

The present inventors have focused on a phenomenon in which in the process of developing a device including a transparent conductive layer, a transparent conductive gas barrier laminate that is supposed to be transparent becomes discolored. When the color of the transparent conductive gas barrier laminate changes over time, even if there is no problem in performance, device manufacturers and users recognize that the transparent conductive gas barrier laminate is deteriorated.

An object of the present disclosure is to provide a transparent conductive gas barrier laminate capable of sufficiently preventing discoloration over time, a method for producing the transparent conductive gas barrier laminate, and a device including the transparent conductive gas barrier laminate.

[Solution to Problem]

A transparent conductive gas barrier laminate according to the present disclosure includes a first transparent gas barrier film; a transparent adhesive layer made of one adhesive selected from the group consisting of an acrylic adhesive, a silicone adhesive, a polyolefin adhesive, a urethane adhesive, and a polyvinyl ether adhesive; a transparent conductive layer made of a conductive organic material or a conductive inorganic material; and a second transparent gas barrier film. The first transparent gas barrier film, the transparent adhesive layer, the transparent conductive layer, and the second transparent gas barrier film are laminated in this order.

In the transparent conductive gas barrier laminate, the transparent conductive layer made of a conductive organic material or a conductive inorganic material is disposed between the first gas barrier film and the second gas barrier film. By employing the configuration in which the transparent conductive layer is sandwiched by the two gas barrier films, it is possible to prevent discoloration over time of the transparent conductive layer due to moisture in the air and the like. Materials having conductivity and transparency are presumed to easily undergo a chromic phenomenon due to the influence of moisture and heat, and according to study by the present inventors, application of a voltage in such an environment may cause more pronounced discoloration.

The present inventors have found that when the transparent adhesive layer is in direct contact with the transparent conductive layer, depending on the type of the transparent adhesive layer, a component contained in the transparent adhesive layer adversely affects the transparent conductive layer. When the transparent conductive layer is made of an organic material (e.g., an organic material containing polyethylenedioxythiophene (PEDOT)), in a test example in which the adhesive for forming the transparent adhesive layer was an epoxy adhesive or an adhesive containing a silane coupling agent, after the laminate was left under the conditions of a temperature of 85°C and a relative humidity of 85%, a phenomenon was observed in which the transparent conductive layer became discolored and lost conductivity. In contrast, according to study by the present inventors, no such phenomenon was observed when the transparent adhesive layer was made of an acrylic adhesive, a silicone adhesive, a polyolefin adhesive, a urethane adhesive, or a polyvinyl ether adhesive.

As described above, the organic material for forming the transparent adhesive layer may be an organic material containing polyethylenedioxythiophene. The transparent adhesive layer may contain a mixture of polyethylenedioxythiophene (PEDOT) and polystyrene sulfonate (PPS) (hereinafter the mixture may be referred to as "PEDOT/PSS"). The inorganic material for forming the transparent adhesive layer may be indium tin oxide (ITO). The transparent conductive layer has a sheet resistance, for example, of 100 to 1000 $\Omega/\square$.

The present disclosure provides a device including the transparent conductive gas barrier laminate. Specifically, the device includes the transparent conductive gas barrier laminate, and a device material layer formed on a surface of the first transparent gas barrier film. The device material layer of the device is protected by the transparent conductive gas barrier laminate and driven via the transparent conductive layer.

The device according to the present disclosure may further include a counter electrode formed on a surface of the device material layer. In the device, at least the first transparent gas barrier film and the transparent adhesive layer are disposed between the device material layer and the transparent conductive layer. The first transparent gas barrier film and the transparent adhesive layer are non-conductive; thus, the device according to the present disclosure is preferably a voltage-driven device. Specific examples of the device include an electronic paper, a liquid crystal display device, and a light control film.

The present disclosure provides a method for producing the transparent conductive gas barrier laminate. Specifically, the production method includes bonding together the first transparent gas barrier film and the transparent conductive layer via the transparent adhesive layer.

[Advantageous Effects of the Invention]

The present disclosure provides a transparent conductive gas barrier laminate capable of sufficiently preventing discoloration over time, a method for producing the transparent conductive gas barrier laminate, and a device including the transparent conductive gas barrier laminate.

[Brief Description of the Drawings]

Fig. 1 is a schematic cross-sectional view illustrating an embodiment of a transparent conductive gas barrier laminate according to the present disclosure.

Fig. 2 is a set of schematic cross-sectional views in which (a) illustrates an example of a configuration of a first transparent gas barrier film, and (b) illustrates another example of the configuration of the first transparent gas barrier film.

Fig. 3 is a set of schematic cross-sectional views in which (a) illustrates an example of a configuration of a second transparent gas barrier film, and (b) illustrates another example of the configuration of the second transparent gas barrier film.

Fig. 4 is a schematic cross-sectional view illustrating an embodiment of a device including the transparent conductive gas barrier laminate.

Fig. 5 (a) and (b) are schematic cross-sectional views illustrating other examples of the configuration of the transparent gas barrier film.

Fig. 6 (a) to (c) are schematic cross-sectional views illustrating other embodiments of the transparent conductive gas barrier laminate according to the present disclosure.

Fig. 7 is a set of schematic cross-sectional views in which (a) illustrates a transparent conductive gas barrier laminate according to a comparative example, and (b) illustrates a device according to the comparative example.

[Description of the Embodiments]

Embodiments of the present disclosure are described in detail below with reference to the drawings. In the drawings, the same or corresponding parts are denoted by the same reference signs, and duplicated description is omitted. Moreover, positional relationships such as up and down, and left and right are based on the positional relationships shown in the drawings, unless otherwise specified. Furthermore, the dimensional ratios in the drawings are not limited to the ratios shown in the drawings.

<Transparent conductive gas barrier laminate>

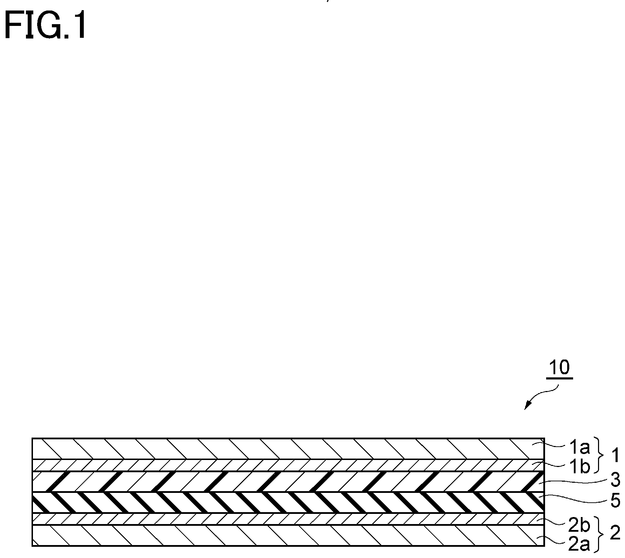

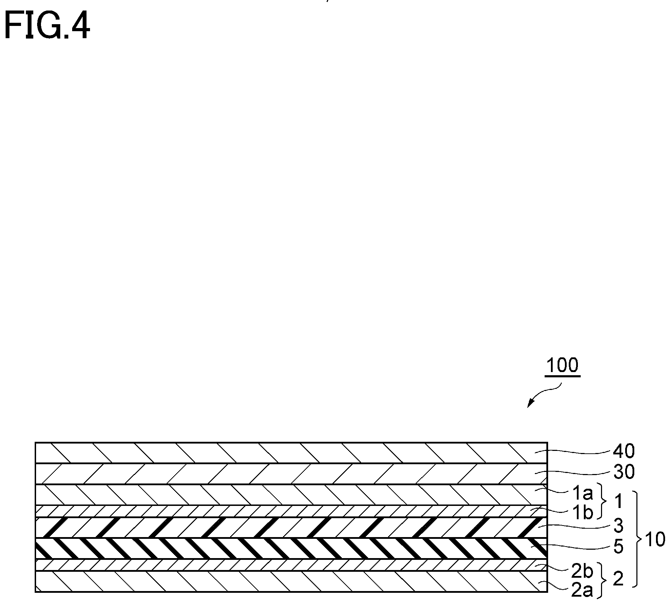

A transparent conductive gas barrier laminate (hereinafter the "transparent conductive gas barrier laminate" according to the present disclosure may be simply referred to as a "laminate") 10 shown in Fig. 1 includes a first transparent gas barrier film 1, a transparent adhesive layer 3, a transparent conductive layer 5, and a second transparent gas barrier film 2 in this order. As shown in Fig. 4, when the laminate 10 is used as a member for protecting a device 100 from moisture and the like, a device material layer 30 is disposed on the first transparent gas barrier film 1 side. Thus, in this case, in the laminate 10, the first transparent gas barrier film 1 side (upper side of Fig. 1) corresponds to the inner side, and the second transparent gas barrier film 2 side (lower side of Fig. 1) corresponds to the outer side. In the laminate 10, another film or layer may be provided between the films or layers described above.

For example, as shown in Fig. 1, the first transparent gas barrier film 1 is composed of a transparent substrate film 1a and a barrier layer 1b.

The transparent substrate film 1a is preferably sufficiently colorless and transparent. The transparent substrate film 1a preferably has a total light transmittance of 85% or more. The transparent substrate film 1a may be, for example, a film having high transparency and good heat resistance such as a polyethylene terephthalate film (PET film) or a polyethylene naphthalate film. The transparent substrate film 1a has a thickness, for example, of 9 to 50 $\mu$m, and preferably 12 to 30 $\mu$m. When the thickness of the transparent substrate film 1a is 9 $\mu$m or more, the transparent substrate film 1a can have sufficient strength. When the thickness of the transparent substrate film 1a is 50 $\mu$m or less, a long roll (roll of transparent gas barrier film 1) can be efficiently and economically produced.

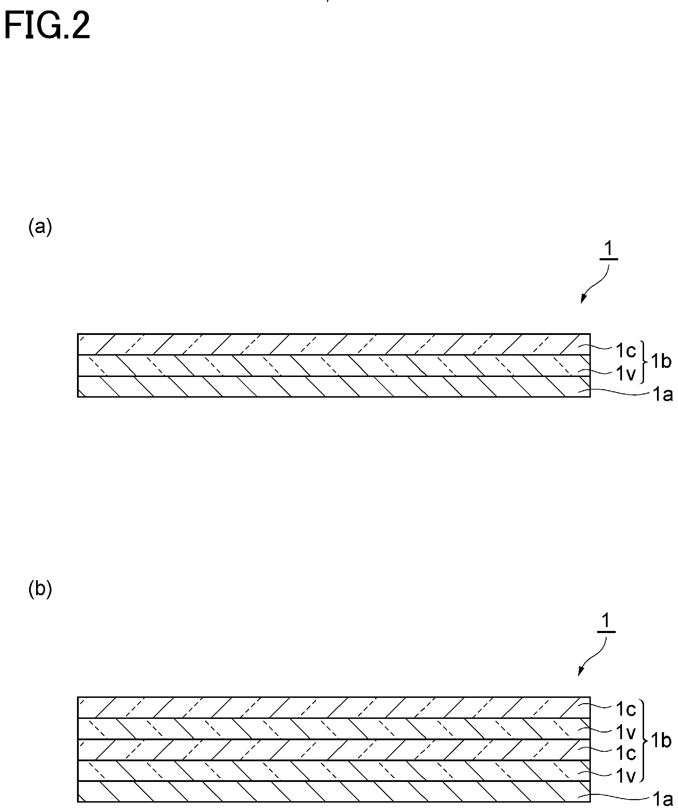

For example, as shown in Fig. 2 (a), the barrier layer 1b is composed of a vapor deposited layer 1v and a gas barrier coating layer 1c. Specifically, the barrier layer 1b is configured such that the vapor deposited layer 1v is provided on one surface of the transparent substrate film 1a and the gas barrier coating layer 1c is provided on the vapor deposited layer 1v. In order to improve the adhesion between the transparent substrate film 1a and the vapor deposited layer 1v, the surface of the transparent substrate film 1a may be subjected to treatment such as plasma treatment, or an anchor coat layer (not shown) made of an acrylic resin layer, a polyester resin, a urethane resin, or the like may be provided on the surface of the transparent substrate film 1a. As shown in Fig. 2 (b), the barrier layer 1b may be configured such that the vapor deposited layers 1v and the gas barrier coating layers 1c are alternately laminated. Although not shown, the barrier layer 1b may be formed on both surfaces of the transparent substrate film 1a.

The vapor deposited layer 1v can be formed, for example, by vapor deposition of aluminum oxide, silicon oxide, silicon oxynitride, magnesium oxide, or a mixture thereof on the transparent substrate film 1a. Of these inorganic materials, aluminum oxide or silicon oxide is preferably used from the viewpoint of barrier properties and productivity. The vapor deposited layer is formed by a method such as vacuum deposition, sputtering, or CVD

The vapor deposited layer 1v preferably has a thickness (film thickness) in the range of 5 to 500 nm, and more preferably in the range of 10 to 100 nm. When the film thickness is 5 nm or more, it is more likely that a uniform film is easily formed and the film can more sufficiently function as a gas barrier material. When the film thickness is 500 nm or less, it is more likely that the film can maintain sufficient flexibility and it is possible to more reliably prevent the occurrence of cracks in the thin film due to external factors such as bending or stretching after film formation.

The gas barrier covering layer 1c is provided to prevent various types of secondary damage in the subsequent steps and to obtain high barrier properties. From the viewpoint of obtaining good barrier properties, the gas barrier coating layer 1c preferably contains, as a component, at least one selected from the group consisting of a hydroxyl group-containing polymer compound, a metal alkoxide, a metal alkoxide hydrolysate, and a metal alkoxide polymer.

Specific examples of the hydroxyl group-containing polymer compound include water-soluble polymers such as polyvinyl alcohol, polyvinyl pyrrolidone, and starch, and in particular, polyvinyl alcohol achieves the best barrier properties.

The metal alkoxide is a compound represented by a general formula: $M(OR)_n$ (where M is a metal atom such as Si, Ti, Al, or Zr, R is an alkyl group such as $-CH_3$ or $-C_2H_5$, and n is an integer corresponding to the valence of M). Specific examples of the metal alkoxide include tetraethoxysilane $[Si(OC_2H_5)_4]$ and triisopropoxy aluminum $[Al(O\text{-}iso\text{-}C_3H_7)_3]$. Tetraethoxysilane and triisopropoxy aluminum are preferable because they are relatively stable in an aqueous solvent after hydrolysis. Further, examples of the metal alkoxide hydrolysate and the metal alkoxide polymer include silicic acid $(Si(OH)_4)$ as a tetraethoxysilane hydrolysate or a tetraethoxysilane polymer, and aluminum hydroxide $(Al(OH)_3)$ as a tripropoxy aluminum hydrolysate or a tripropoxy aluminum polymer.

The gas barrier coating layer 1c preferably has a thickness (film thickness) in the range of 50 to 1000 nm, and more preferably in the range of 100 to 500 nm. When the film thickness is 50 nm or more, the film is more likely to have more sufficient gas barrier properties. When the film thickness is 1000 nm or less, the film is more likely to maintain sufficient flexibility.

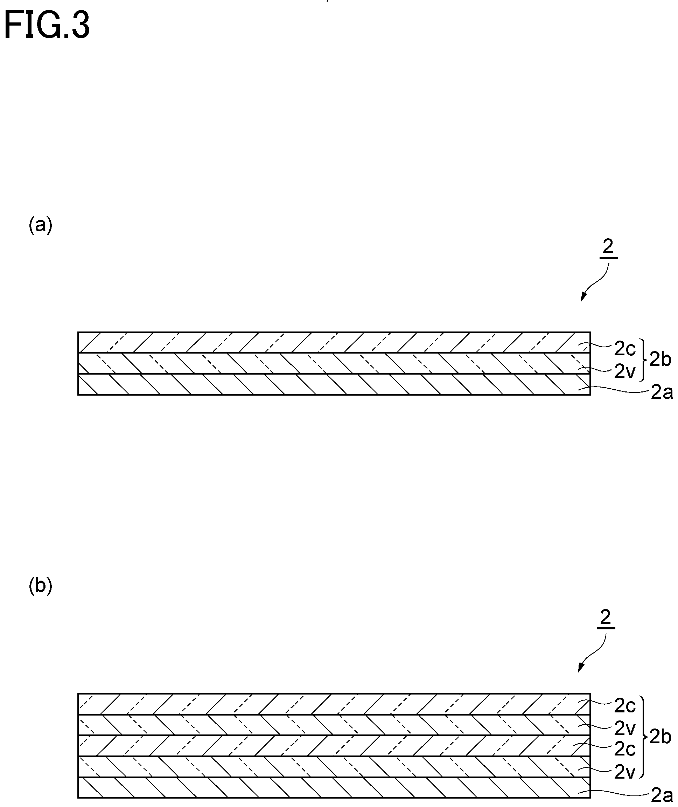

As shown in Fig. 1, the second transparent gas barrier film 2 is composed of a transparent substrate film 2a and a barrier layer 2b. The second transparent gas barrier film 2 may have the same configuration (laminate structure, material, thickness, and the like) as the first transparent gas barrier film 1. Specifically, the second transparent gas barrier film 2 may be configured such that as shown in Fig. 3 (a), the barrier layer 2b is composed of a pair of vapor deposited layer 2v and gas barrier coating layer 2c or that as shown in Fig. 3 (b), the barrier layer 2b is composed of a plurality of pairs of vapor deposited layers 2v and gas barrier coating layers 2c.

The transparent conductive layer 5 is a layer made of a conductive organic material. As shown in Fig. 1, the transparent conductive layer 5 is disposed between the two transparent gas barrier films 1 and 2, that is, the transparent conductive layer 5 is sandwiched by the two transparent gas barrier films 1 and 2. By employing such a configuration, it is possible to prevent discoloration over time of the transparent conductive layer 5 due to moisture in the air and the like.

The conductive organic material may be a conductive polymer containing polyethylenedioxythiophene (PEDOT). The transparent conductive layer 5 may contain a mixture (PEDOT/PSS) of polyethylenedioxythiophene (PEDOT) and polystyrene sulfonate (PPS).

The transparent conductive layer 5 preferably has a thickness (film thickness) in the range of 0.1 to 2.0 $\mu$m, and more preferably in the range of 0.1 to 0.4 $\mu$m. When the film thickness is 0.1 $\mu$m or more, it is more likely that a uniform film is easily formed and the film can more sufficiently function as a conductive layer. When the film thickness is 2.0 $\mu$m or less, it is more likely that the film can maintain sufficient flexibility and it is possible to more reliably prevent the occurrence of cracks in the thin film due to external factors such as bending or stretching after film formation. The transparent conductive layer 5 has a sheet resistance, for example, in the range of 100 to 1000 $\Omega/\square$, preferably in the range of 100 to 500 $\Omega/\square$, and more preferably in the range of 100 to 150 $\Omega$. The sheet resistance of the transparent conductive layer 5 can be measured, for example, using a Loresta-GP MCP-T610 (trade name, manufactured by Mitsubishi Chemical Analytech Co., Ltd.).

The transparent conductive layer 5 can be formed, for example, by applying a coating liquid containing a conductive polymer. The transparent conductive layer 5 may be formed so as to cover the entire second transparent gas barrier film 2 (what is called solid coating), or may be formed in a pattern.

The transparent adhesive layer 3 is disposed between the first transparent gas barrier film 1 and the transparent conductive layer 5 and bonds together the first transparent gas barrier film 1 and the transparent conductive layer 5. According to study by the present inventors, the transparent adhesive layer 3 that is in direct contact with the transparent conductive layer 5 preferably does not contain an epoxy group or a silane coupling agent. If the transparent adhesive layer 3 contains an epoxy group, presumably, PEDOT contained in the transparent conductive layer 5 is reduced and the hole density is reduced, leading to a reduction in conductivity of the transparent conductive layer 5. Furthermore, even if the transparent adhesive layer 3 contains a silane coupling agent, presumably, PEDOT contained in the transparent conductive layer 5 is reduced, leading to a reduction in conductivity of the transparent conductive layer 5.

Examples of the adhesive for forming the transparent adhesive layer 3 include an acrylic adhesive, a silicone adhesive, a polyolefin adhesive, a urethane adhesive, and a polyvinyl ether adhesive. Among these, an acrylic adhesive is preferable because of having high transparency and good heat resistance. The transparent adhesive layer 3 has a thickness, for example, of 0.5 to 50 $\mu$m, and may have a thickness of 1 to 20 $\mu$m or 2 to 6 $\mu$m.

The adhesive for forming the transparent adhesive layer 3 may have oxygen barrier properties. In this case, the transparent adhesive layer 3 having a thickness of 5 $\mu$m has an oxygen permeability, for example, of 1,000 cm$^3$/(m$^2$·day·atm) or less in the thickness direction. The oxygen permeability is preferably 500 cm$^3$/(m$^2$·day·atm) or less, more preferably 100 cm$^3$/(m$^2$·day·atm) or less, still more preferably 50 cm$^3$/(m$^2$·day·atm) or less, and particularly preferably 10 cm$^3$/(m$^2$·day·atm) or less. When the oxygen permeability of the transparent adhesive layer 3 is 1,000 cm$^3$/(m$^2$·day·atm) or less, the transparent adhesive layer 3 can compensate for defects of the barrier layer 1b, if any. The lower limit of the oxygen permeability is not particularly limited, and is, for example, 0.1 cm$^3$/(m$^2$·day·atm).

<Method for producing transparent conductive gas barrier laminate>

The transparent conductive gas barrier laminate 10 can be produced, for example, by a roll-to-roll method. First, a transparent gas barrier film 1 is produced. Specifically, a vapor deposited layer 1v is laminated by vapor deposition on one surface of a transparent substrate film 1a. Subsequently, a coating agent is prepared. The coating agent contains, as a main agent, an aqueous solution or a water-alcohol mixed solution that contains, for example, at least one component selected from the group consisting of a hydroxyl group-containing polymer compound, a metal alkoxide, a metal alkoxide hydrolysate, and a metal alkoxide polymer. Then, the coating agent is applied to the surface of the vapor deposited layer 1v, and dried, for example, at 80 to 250°C, thereby forming a gas barrier coating layer 1c. A transparent gas barrier film 2 is produced in the same manner as the transparent gas barrier film 1.

A transparent conductive layer 5 is formed on the inner surface of the transparent gas barrier film 2. Then, through a step of bonding together the first transparent gas barrier film 1 and the transparent conductive layer 5 via the transparent adhesive layer 3, the laminate 10 is produced.

<Device>

The device 100 shown in Fig. 4 includes the laminate 10 (the first transparent gas barrier film 1, the transparent adhesive layer 3, the transparent conductive layer 5, and the second transparent gas barrier film 2), the device material layer 30, and a counter electrode 40. Specific examples of the device 100 include an electronic paper, a liquid crystal display device, and a light control film that are voltage-driven devices. As shown in Fig. 4, the device material layer 30 is formed on the surface of the transparent gas barrier film 1. The device material layer 30 refers to a layer containing a material that allows the device 100 to function. For example, when the device 100 is an electronic paper, a layer including a microcapsule containing, for example, pigment particles for displaying characters and the like corresponds to the device material layer 30.

The transparent adhesive layer 3 may have ultraviolet shielding properties from the viewpoint of preventing deterioration of the device material layer 30 due to ultraviolet light. Specifically, the transparent adhesive layer 3 may contain an ultraviolet absorber. The ultraviolet absorber may contain a compound such as a benzotriazole-based compound, a benzophenone-based compound, or a triazine-based compound. As a commercially available product, Tinuvin (registered trademark) 400 (trade name, manufactured by BASF SE) or the like may be used.

The transparent substrate film 2a may be a film having ultraviolet shielding properties from the viewpoint of preventing deterioration of the transparent conductive layer 5 due to ultraviolet light. Protecting the transparent conductive layer 5 from ultraviolet light can prevent an increase over time in the sheet resistance of the transparent conductive layer 5. The transparent substrate film 1a may be a film having ultraviolet shielding properties from the viewpoint of preventing deterioration of the device material layer 30 due to ultraviolet light.

Embodiments of the present disclosure have been described in detail; however, the technical scope of the present invention is not limited to the above embodiments, and various modifications can be made within a range not departing from the gist of the present invention.

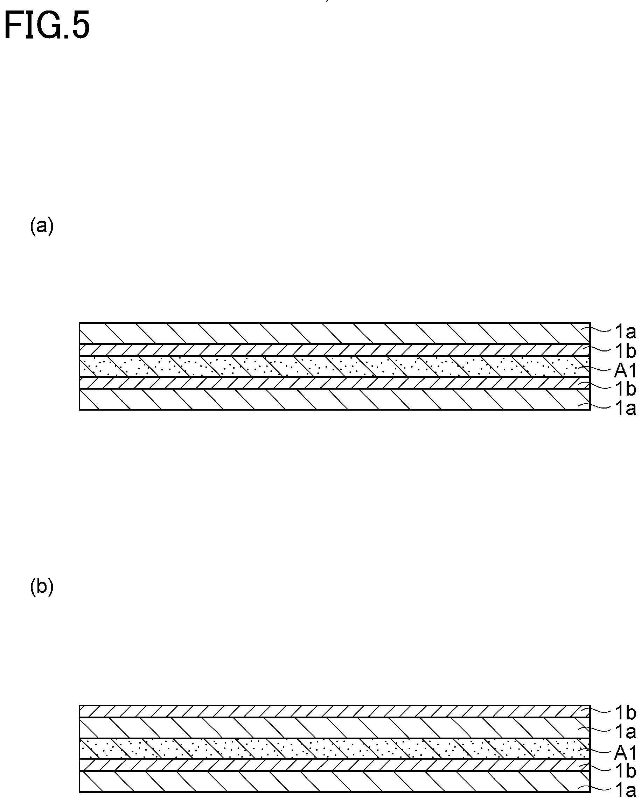

For example, at least one of the first transparent gas barrier film 1 and the second transparent gas barrier film 2 may have a configuration shown in Fig. 5 (a) or Fig. 5 (b) (a configuration in which the transparent gas barrier film includes two pairs of gas barrier films). In a transparent gas barrier film 12A shown in Fig. 5 (a), the two pairs of gas barrier films are laminated via a transparent adhesive layer A1 so that the respective barrier layers 1b face each other. In a transparent gas barrier film 12B shown in Fig. 5 (b), the two pairs of gas barrier films are laminated via the transparent adhesive layer A1 so that the barrier layer 1b of one pair (lower side of Fig, 5 (b)) faces the transparent substrate film 1a of the other pair (upper side of Fig, 5 (b)). The transparent adhesive layer A1 may be made of an acrylic adhesive, an epoxy adhesive, a urethane adhesive, or the like. In particular, an acrylic adhesive is preferable because of having high transparency and good heat resistance. The transparent adhesive layer A1 has a thickness, for example, of 0.5 to 50 $\mu$m, and may have a thickness of 1 to 20 $\mu$m or 2 to 6 $\mu$m. As with the adhesive for forming the transparent adhesive layer 3, the adhesive for forming the transparent adhesive layer A1 may have oxygen barrier properties and ultraviolet shielding properties.

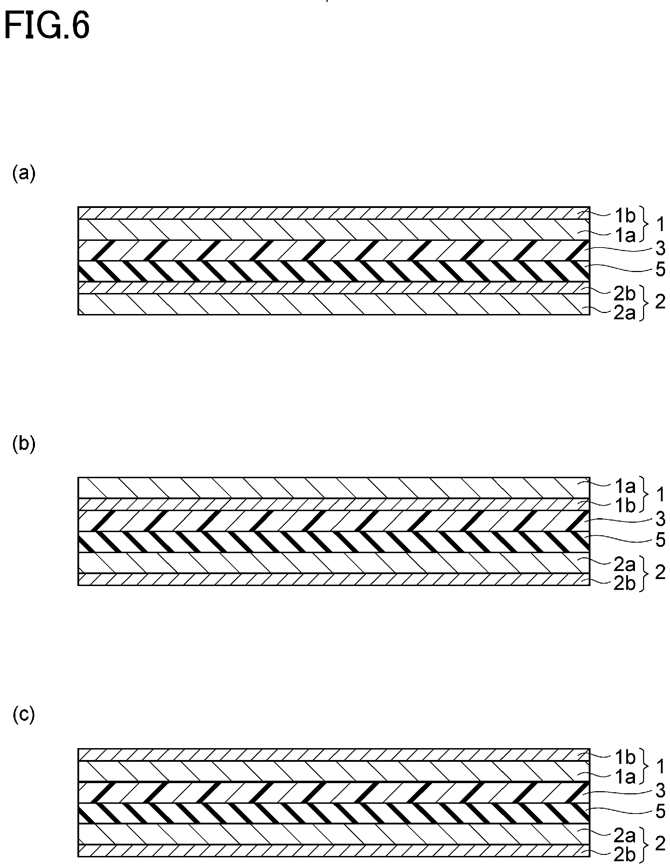

In the above embodiments, as shown in Fig. 1, the transparent conductive gas barrier laminate 10 has been described as an example in which the transparent substrate film 1a and the transparent substrate film 2a are the outermost layers. Such a configuration has an advantage in that due to the two barrier layers 1b and 2b disposed near the transparent conductive layer 5, it is possible to more effectively prevent the influence of moisture and the like on the transparent conductive layer 5. Furthermore, the configuration has an advantage in that, for example, in the production of a transparent conductive gas barrier laminate by a roll-to-roll method, the transparent substrate films 1a and 2a are easily in contact with a conveying roller, thus preventing the barrier layers 1b and 2b from being damaged by contact with the roller or the like. When there is a possibility that the adhesion between the barrier layer 1b and the transparent adhesive layer 3 may be insufficient, as shown in Fig. 6 (a), the front and back of the first transparent gas barrier film 1 may be reversed. That is, the transparent substrate film 1a may be in direct contact with the transparent adhesive layer 3. When there is a possibility that the adhesion between the barrier layer 2b and the transparent conductive layer 5 is insufficient, as shown in Fig. 6 (b), the front and back of the second transparent gas barrier film 2 may be reversed. That is, the transparent substrate film 2a may be in direct contact with the transparent conductive layer 5. As shown in Fig. 6 (c), the front and back of both the first transparent gas barrier film 1 and the second transparent gas barrier film 2 may be reversed.

In the above embodiments, an example has been described in which the transparent conductive layer 5 is made of a conductive polymer (organic material); however, the transparent conductive layer 5 may be made of an inorganic material such as indium tin oxide (ITO), instead of the organic material. When the transparent conductive layer 5 is made of an inorganic oxide such as ITO, the influence of moisture and the like causes a reaction, changing oxygen deficiency, and this may affect a band gap and cause discoloration of the band gap.

In the above embodiments, an example has been described in which the transparent conductive gas barrier laminate 10 is used as the member for protecting the device 100 from moisture and the like; however, the transparent conductive gas barrier laminate itself may be used for other applications. Examples of other applications include the use as an electromagnetic wave suppression sheet.

[Examples]

The present invention will be more specifically described below by way of examples and comparative examples, but the present invention is not limited to the following examples. In the examples and the comparative examples, the increase rate of the sheet resistance and the change amount ($\Delta$b*) of b* in the L*a*b* color system were measured as follows.

(1) Increase rate of sheet resistance

The sheet resistance (the initial value and the value after UV exposure) of the transparent conductive layer was measured by using a Loresta-GP MCP-T610 (trade name, manufactured by Mitsubishi Chemical Analytech Co., Ltd.). The laminate was irradiated with ultraviolet light from the transparent gas barrier film side toward the transparent conductive layer side for 100 hours. The increase rate of the sheet resistance was calculated by the following formula.

Increase rate (%) of sheet resistance = (Value after UV exposure - Initial value)/(Initial value) × 100

(2) Change amount ($\Delta$b*) of b* in L*a*b* color system

The spectral transmittance (the initial value and the value after UV exposure) of the transparent conductive gas barrier laminate was measured using a UV-2450 (trade name, manufactured by Shimadzu Corporation). From the measurement results, tristimulus values X, Y, and Z of the object color based on transmission in the tristimulus value XYZ color system of the object color were obtained by the following formulas to calculate b*. The laminate was irradiated with ultraviolet light from the transparent gas barrier film side toward the transparent conductive layer side for 100 hours.

[Math. 1]

$$X = K \int P(\lambda)x(\lambda)T(\lambda)d\lambda$$

$$Y = K \int P(\lambda)y(\lambda)T(\lambda)d\lambda$$

$$Z = K \int P(\lambda)z(\lambda)T(\lambda)d\lambda$$

$$K = \frac{100}{\int P(\lambda)x(\lambda)T(\lambda)d\lambda}$$

$x(\lambda)$, $y(\lambda)$, $z(\lambda)$: Color-matching functions in XYZ color system
$T(\lambda)$: Spectral transmittance
$P(\lambda)$: Spectral distribution of standard light

$$b^* = 200\left[\left(\frac{Y}{Yn}\right)^{\frac{1}{3}} - \left(\frac{Z}{Zn}\right)^{\frac{1}{3}}\right]$$

Yn, Zn: Tristimulus values of perfect reflecting diffuser in each light-source field of view

Change amount ($\Delta$b*) of b* = Value after UV exposure - Initial value

When $\Delta$b* had a positive value, the color of the transparent conductive gas barrier laminate was more yellowish, and when $\Delta$b* had a negative value, the color of the transparent conductive gas barrier laminate was more bluish.

<Preparation of transparent conductive gas barrier laminate>

[Example 1A]

Two transparent gas barrier films were prepared as follows. First, an acrylic resin coating liquid was applied to one surface of a PET film having a thickness of 12 μm as a transparent substrate film, and dried to form an anchor coat layer. Then, silicon oxide was vacuum deposited on the anchor coat layer to form a vapor deposited layer having a thickness of 30 nm. Furthermore, a gas barrier coating layer having a thickness of 300 nm was formed on the vapor deposited layer. The gas barrier coating layer was formed by applying a coating liquid containing tetraethoxysilane and polyvinyl alcohol by a wet coating method. Thus, a transparent gas barrier film was obtained in which a barrier layer composed of a pair of a silicon oxide vapor deposited layer and gas barrier coating layer was provided on one surface of the transparent substrate film (see Fig. 2(a)). In the same manner, a transparent gas barrier film was separately prepared (see Fig. 3 (a)).

On the gas barrier coating layer of one of the transparent gas barrier films, a transparent conductive layer having a thickness of 150 nm was formed. The transparent conductive layer was formed by applying a coating liquid containing PEDOT (manufactured by Nagase ChemteX Corporation) by a wet coating method. The transparent conductive layer had a sheet resistance of 150 Ω/□. The transparent conductive layer was bonded to the other transparent gas barrier film via a transparent adhesive layer to obtain a transparent conductive gas barrier laminate (see Fig. 1). As the adhesive for forming the transparent adhesive layer, an optical acrylic adhesive (manufactured by Saiden Chemical Industry Co., Ltd.) was used.

[Example 2A]

A transparent conductive gas barrier laminate was obtained as in Example 1A except that as the adhesive for forming the transparent adhesive layer, an optical silicone adhesive (manufactured by Nichiei Kako Co., Ltd.) was used instead of the optical acrylic adhesive (manufactured by Saiden Chemical Industry Co., Ltd.) (see Fig. 1).

[Example 3A]

A transparent conductive gas barrier laminate was obtained as in Example 1A except that an ITO film (thickness 50 nm) was formed by vacuum deposition, instead of forming a transparent conductive layer (thickness 150 nm) by using a solution containing PEDOT (see Fig. 1).

[Example 4A]

A transparent conductive gas barrier laminate was obtained as in Example 2A except that an ITO film (thickness 50 nm) was formed by vacuum deposition, instead of forming a transparent conductive layer (thickness 150 nm) by using a solution containing PEDOT (see Fig. 1).

[Comparative Example 1A]

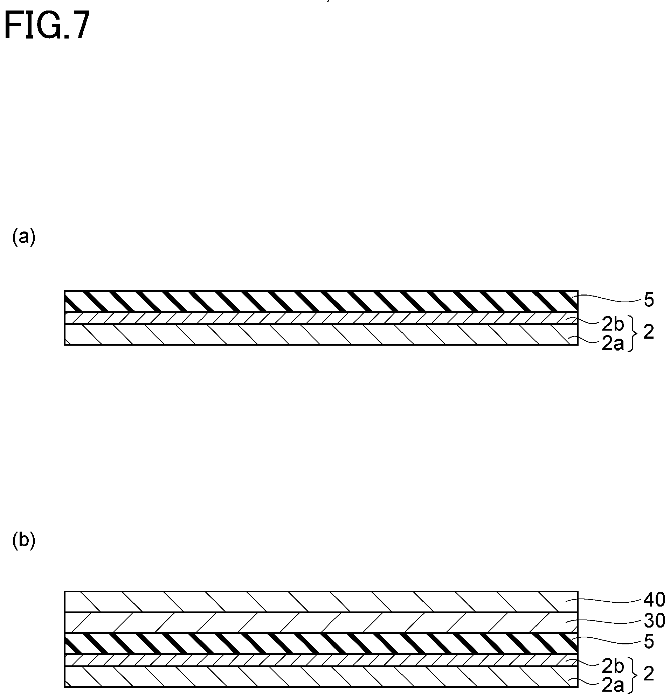

A transparent gas barrier film was prepared as in Example 1A (see Fig. 2 (a)). On the gas barrier coating layer of the transparent gas barrier film, a transparent conductive layer (thickness 150 nm) containing PEDOT was formed as in Example 1A (see Fig. 7 (a)). Thus, a laminate was obtained in which the transparent conductive layer was exposed.

[Comparative Example 2A]

A transparent gas barrier film was prepared as in Example 1 (see Fig. 2 (a)). On the gas barrier coating layer of the transparent gas barrier film, a transparent conductive layer (thickness 50 nm) made of ITO was formed as in Example 3A (see Fig. 7 (a)). Thus, a laminate was obtained in which the transparent conductive layer was exposed.

[Comparative Example 3]

A transparent conductive gas barrier laminate was obtained as in Example 1A except that as the adhesive for forming the transparent adhesive layer, an optical epoxy adhesive (manufactured by Mitsubishi Chemical Corporation) was used instead of the optical acrylic adhesive (manufactured by Saiden Chemical Industry Co., Ltd.) (see Fig. 1).

[Comparative Example 4]

A transparent conductive gas barrier laminate was obtained as in Example 1A except that as the adhesive for forming the transparent adhesive layer, an adhesive containing a silane coupling agent (manufactured by Mitsubishi Chemical Corporation) was used instead of the optical acrylic adhesive (manufactured by Saiden Chemical Industry Co., Ltd.) (see Fig. 1).

<Preparation of electronic paper>

[Example 1B]

An electronic paper including a transparent conductive gas barrier laminate obtained as in Example 1A, a device material layer, and a counter electrode was prepared (see Fig. 4). The device material layer contained an epoxy resin.

[Examples 2B to 4B]

Electronic papers were prepared as in Example 1B except that the electronic papers of Examples 2B to 4B included transparent conductive gas barrier laminates obtained as in Examples 2A to 4A, respectively (see Fig. 4).

[Comparative Example 1B and Comparative Example 2B]

Electronic papers were prepared as in Example 1B except that the electronic papers of Comparative Example 1B and Comparative Example 2B included laminates obtained as in Comparative Example 1A and Comparative Example 2A, respectively (see Fig. 7 (b)).

The results are shown in Table 1.

[Table 1]

| | Transparent adhesive layer | Transparent conductive layer | Increase rate of sheet resistance | $\Delta b'$ |
|---|---|---|---|---|
| Example 1A | Acrylic adhesive | PEDOT | <10% | $<\pm 0.5$ |
| Example 2A | Silicone adhesive | PEDOT | <10% | $<\pm 0.5$ |
| Example 3A | Acrylic adhesive | ITO | <10% | $<\pm 0.5$ |
| Example 4A | Silicone adhesive | ITO | <10% | $<\pm 0.5$ |
| Comparative Example 1A | - | PEDOT | 40% | -3 |
| Comparative Example 2A | - | ITO | 30% | +3 |
| Comparative Example 3 | Epoxy adhesive | PEDOT | - | -6.5 |
| Comparative Example 4 | Adhesive containing silane coupling agent | PEDOT | - | -7 |

The transparent conductive layers according to Comparative Example 3 and Comparative Example 4 were found to have lost conductivity after UV exposure; thus, the sheet resistance was unmeasurable.

The electronic papers according to Examples 1B to 4B were confirmed to be normally driven. On the other hand, the electronic papers according to Comparative Examples 1B and 2B were not driven. This is presumably because the device material layer contained an epoxy resin and was in direct contact with the transparent conductive layer.

[Industrial Applicability]

The present disclosure provides a transparent conductive gas barrier laminate capable of sufficiently preventing discoloration over time, a method for producing the transparent conductive gas barrier laminate, and a device including the transparent conductive gas barrier laminate.

[Reference Signs List]

| 1 | First transparent gas barrier film |
| 1a | Transparent substrate film |
| 1b | Barrier layer |
| 1v | Vapor deposited layer |
| 1c | Gas barrier coating layer |
| 2 | Second transparent gas barrier film |
| 2a | Transparent substrate film |
| 2b | Barrier layer |
| 2v | Vapor deposited layer |
| 2c | Gas barrier coating layer |
| 3 | Transparent adhesive layer |
| 5 | Transparent conductive layer |
| 10 | Transparent conductive gas barrier laminate |
| 12A, 12B | Transparent gas barrier film |
| 30 | Device material layer |
| 100 | Device |

**Claims**

1. A transparent conductive gas barrier laminate comprising:

   a first transparent gas barrier film;
   a transparent adhesive layer made of one adhesive selected from the group consisting of an acrylic adhesive, a silicone adhesive, a polyolefin adhesive, a urethane adhesive, and a polyvinyl ether adhesive;
   a transparent conductive layer made of a conductive organic material or a conductive inorganic material; and
   a second transparent gas barrier film,
   the first transparent gas barrier film, the transparent adhesive layer, the transparent conductive layer, and the second transparent gas barrier film being laminated in this order.

2. The transparent conductive gas barrier laminate according to claim 1, wherein the organic material contains polyethylenedioxythiophene.

3. The transparent conductive gas barrier laminate according to claim 1, wherein the inorganic material is indium tin oxide.

4. The transparent conductive gas barrier laminate according to any one of claims 1 to 3, wherein the transparent conductive layer has a sheet resistance of 100 to 1000 $\Omega/\square$.

5. A device comprising:

   the transparent conductive gas barrier laminate according to any one of claims 1 to 4; and
   a device material layer formed on a surface of the first transparent gas barrier film.

6. The device according to claim 5 further comprising a counter electrode formed on a surface of the device material layer.

7. The device according to claim 5 or 6, wherein the device is a voltage-driven device.

8. The device according to any one of claims 5 to 7, wherein the device is an electronic paper, a liquid crystal display device, or a light control film.

9. A method for producing the transparent conductive gas barrier laminate according to any one of claims 1 to 4, the method comprising
bonding together the first transparent gas barrier film and the transparent conductive layer via the transparent adhesive layer.

# FIG.1

# FIG.2

(a)

(b)

# FIG.3

(a)

(b)

# FIG.4

# FIG.5

(a)

1a
1b
A1
1b
1a

(b)

1b
1a
A1
1b
1a

# FIG.6

(a)

(b)

(c)

# FIG.7

(a)

- 5
- 2b ⎫
- 2a ⎭ 2

(b)

- 40
- 30
- 5
- 2b ⎫
- 2a ⎭ 2

# INTERNATIONAL SEARCH REPORT

| | International application No. |
|---|---|
| | PCT/JP2020/015096 |

**A. CLASSIFICATION OF SUBJECT MATTER**
Int.Cl. B32B7/025(2019.01)i, B32B27/00(2006.01)i, B32B27/18(2006.01)i
FI: B32B7/025, B32B27/00D, B32B27/18J

According to International Patent Classification (IPC) or to both national classification and IPC

**B. FIELDS SEARCHED**

Minimum documentation searched (classification system followed by classification symbols)
Int.Cl. B32B1/00-43/00

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2013/141275 A1 (FUJIFILM CORPORATION) 26.09.2013 (2013-09-26), claims, paragraphs [0020]-[0023], [0137], [0138], drawings, entire text | 1, 4-9<br>2-3 |
| A | WO 2018/181181 A1 (TOPPAN PRINTING CO., LTD.) 04.10.2018 (2018-10-04), entire text | 1-9 |
| A | JP 63-272542 A (SEKISUI CHEMICAL CO., LTD.) 10.11.1988 (1988-11-10), entire text | 1-9 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04.06.2020 | 16.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/015096

| WO 2013/141275 A1 | 26.09.2013 | JP 2013-198990 A<br>claims, paragraphs [0020]-[0023],<br>[0137], [0138], drawings |
| WO 2018/181181 A1 | 04.10.2018 | US 2020/0009829 A1<br>entire text<br>CN 110431008 A |
| JP 63-272542 A | 10.11.1988 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003175566 A

- JP 2012086378 A